# EUROPEAN PATENT SPECIFICATION

(11) **EP 4 661 162 B1**
(45) Date of publication and mention of the grant of the patent: **28.10.2026**
(21) Application number: 25178735.4
(22) Date of filing: 26.05.2025
(51) Int. Cl.: H01M 10/613, H01M 10/615, H01M 10/6557, H01M 50/291, H01M 10/6568, H01M 50/209, H01M 10/617, H01M 10/625, H01M 50/202, H01M 10/647

(54) **A BATTERY UNIT WITH BATTERY CELLS IN DIRECT CONTACT WITH A FLOW OF A TEMPERATURE-REGULATING LIQUID AND WITH A SAFETY SYSTEM FOR LIMITING THE PROPAGATION OF A THERMAL RUNAWAY CONDITION OF ONE OR MORE CELLS**
BATTERIEEINHEIT MIT BATTERIEZELLEN IN DIREKTEM KONTAKT MIT EINEM TEMPERATURREGLER UND MIT EINEM SICHERHEITSSYSTEM
UNITÉ DE BATTERIE AVEC DES ÉLÉMENTS DE BATTERIE EN CONTACT DIRECT AVEC UN FLUX D'UN LIQUIDE DE RÉGULATION DE TEMPÉRATURE

(30) Priority: 06.06.2024 IT 202400013039
(43) Date of publication of application: 10.12.2025
(73) Proprietor: C.R.F. Società Consortile per Azioni, 10043 Orbassano (Torino) (IT)
(72) Inventor: GARGANO, Marcello, I-10043 Orbassano (Torino) (IT); MAZZARELLA, Carlo, I-10043 Orbassano (Torino) (IT); DE MICHELE, Onofrio, I-10043 Orbassano (Torino) (IT); RICCO, Raffaele, I-10043 Orbassano (Torino) (IT); TRENTADUE, Maurizio, I-10043 Orbassano (Torino) (IT); LORUSSO, Eligio, I-10043 Orbassano (Torino) (IT)
(74) Representative: Buzzi, Notaro & Antonielli d'Oulx S.p.A.

(56) References cited:
- WO-A1-2024/062012
- CN-A- 117 642 914
- DE-A1- 102018 133 004

## Description

### Field of the invention

This invention relates to an electric battery unit of the type comprising an array of battery cells disposed within a container of the battery unit, and configured to be in direct contact with a flow of a temperature-regulating liquid passing through the container, for maintaining the battery unit within a specified temperature range,
wherein said container includes an inlet opening for the temperature-regulating liquid, communicating with an inlet collector chamber, and an outlet opening for the temperature-regulating liquid, communicating with an outlet collector chamber,
wherein the battery cells are spaced from each other by spacer frames that define spaces between the battery cells, which connect the inlet collector chamber and the outlet collector chamber to each other,
wherein each space between the battery cells communicates with the inlet collector chamber and/or the outlet collector chamber via one or more restricted passages for the temperature-regulating liquid, formed in the respective spacer frame and configured to generate sufficient resistance to the passage of the liquid thermoregulator to prevent the temperature-regulating liquid from tending to flow to a greater extent into the spaces that are closer to the inlet opening and/or the outlet opening of the container.

### Prior art

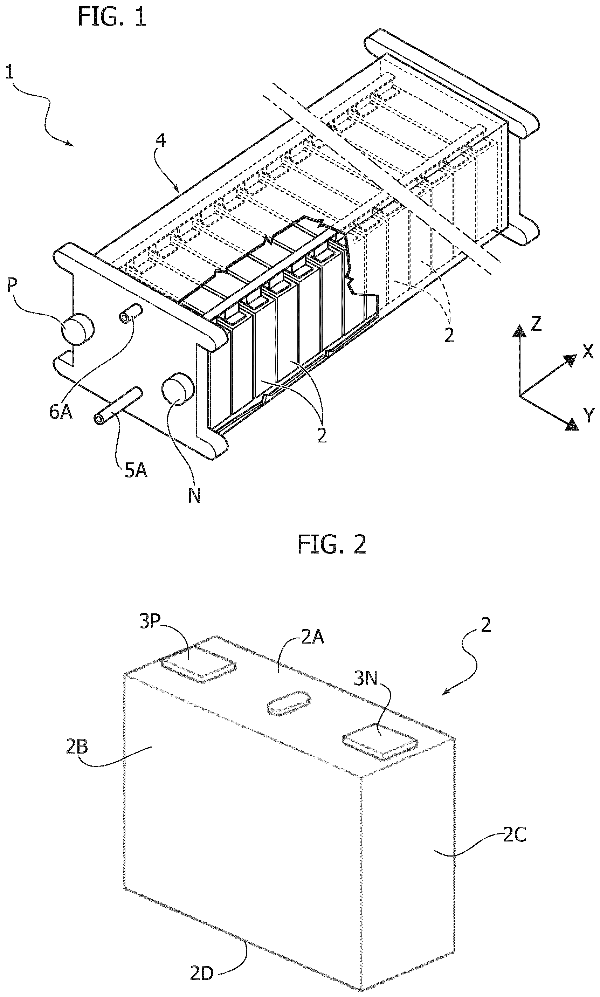

Electric battery units having the above features have been known and used for some time. Figures 1-4 of the accompanying drawings refer to a battery unit of this known type. The description of these figures is also useful for understanding this invention, since the general features of the battery unit of figure 1 are the same also in the case of the invention.

Figure 1 is a schematic perspective view of a known battery unit, of the type provided with a temperature-regulating system using a temperature-regulating liquid in direct contact with the battery cells. The battery unit of figure 1, indicated as a whole with the reference number 1, includes a plurality of prismatic cells 2, arranged aligned along a direction X inside a container 4 and immersed in a flow of a temperature-regulating liquid that passes through the container 4.

In the present description, and in the annexed drawings, the construction details relating to the temperature-regulating liquid supply circuit and to the temperature control of the temperature-regulating liquid are not illustrated, since they can be made in any known way and also since such details, taken separately, do not fall within the scope of this invention. In general, the temperature-regulating liquid supply system can include a pump to activate the circulation of the liquid and one or more heat exchangers to maintain the temperature-regulating liquid at a desired temperature. The temperature-regulating liquid (e.g., dielectric oil) can perform both a cooling function, when the temperature of the battery unit tends to exceed a predetermined maximum threshold value, and a heating function, when the temperature of the battery unit tends to fall below a predetermined minimum threshold value. The temperature-regulating liquid supply system is preferably controlled electronically on the basis of the signals emitted by one or more sensors arranged in the battery unit. Again, all the above details are not illustrated here, both because they can be made in any known way, and because they do not fall, taken individually, within the scope of the invention, and also because their elimination from the drawings makes the latter simpler and easier to understand.

Figure 2 is an enlarged perspective view of a prismatic battery cell 2, comprising a top surface 2A, two opposite main surfaces 2B, which, inside the container 4, are arranged orthogonally to the cell alignment direction X, two side walls 2C and a bottom wall 2D. In the example illustrated in figure 2, the positive pole 3P and the negative pole 3N of the battery cell 2 protrude from the top wall 2A.

According to a technique known in itself, all the positive poles 3P and all the poles 3N of the cells 2 are electrically connected to each other and to the two respective 3P and 3N, protruding, in the example illustrated, from an end wall of the container 4 (see figure 1).

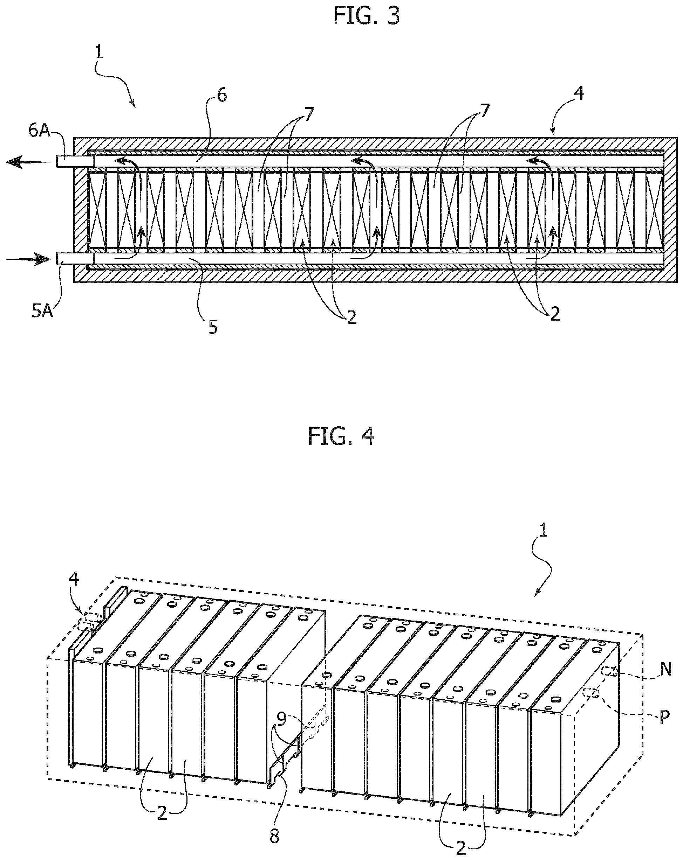

Figure 3 is a schematic sectional view, in the median vertical plane, of the battery unit of figure 1. With reference to this figure, the container 4 includes an inlet opening 5A for a temperature-regulating liquid, communicating with an inlet collector chamber 5 arranged below the array of battery cells 2. The container 4 also includes an outlet opening 6A for a temperature-regulating liquid, communicating with an outlet collector chamber 6 arranged above the array of battery cells 2. Again with reference to figure 3, the battery cells 2 are kept spaced from each other by means of spacer frames, so as to define a plurality of spaces 7 which put the inlet collector chamber 5 in hydraulic communication with the outlet collector chamber 6. The set of cells and spacer frames is maintained in an assembled condition by the application of a compressive force along the longitudinal direction X (figure 1) by means of any known type, for example by tie rods (not illustrated). The size of the spaces 7 between the cells 2 has been exaggerated for clarity in figure 3. In reality, the distance between two adjacent cells may be, for example, of the order of a few millimeters (for example, about 3 mm).

Figure 4 is a partially sectioned perspective view of a battery unit of the known type described above, in which one of the cells 2 has been removed, to illustrate a portion of a spacer frame, comprising a lower horizontal strip 8, which extends along the lower edge of a cell 2, for the entire width of the cell 2 (i.e. in the direction Y of figure 1).

In a known solution, in the lower strip 8 of each spacer frame several restricted passages are formed for the temperature-regulating liquid, which control the communication between the inlet collector chamber and the space in which each spacer frame is arranged and which is in turn in communication with the outlet collector chamber. Said restricted passages are configured to generate sufficient resistance to the passage of the temperature-regulating liquid to prevent the temperature-regulating liquid from tending to flow to a greater extent into the spaces 7 that are closer to the inlet opening 5A and/or the outlet opening 6A of the container.

In electric battery units of the type described above, there is the problem of ensuring adequate safety even in the case in which one or more cells of the unit have a malfunction that results in an uncontrolled thermal runaway, i.e. a condition in which the heat generated by a battery cell exceeds the amount of heat that can be dissipated outside the cell. This condition tends to propagate to the other cells, with the risk of triggering an uncontrolled and irreversible phenomenon. A thermal runaway condition of a battery cell leads to a rupture of the cell with consequent escape of combustion gases from the cell.

**In** battery units of the known type described above, the arrangement of said restricted passages, designed to equalize the flow rate of the temperature-regulating liquid through the different spaces between the cells of the unit, leads to the impossibility of increasing the flow rate of the temperature-regulating liquid at a cell that is in a thermal runaway condition. Even by increasing the total flow rate with which the temperature-regulating liquid is fed by the pump provided for this purpose, the flow rate of the temperature-regulating liquid adjacent to the failed cell cannot be increased beyond a certain limit, precisely because of the existence of the restricted passages that are interposed in the communication between the inlet collector chamber and the spaces between the battery cells.

A solution to the above problem has already been proposed by the Applicant in its Italian patent application IT 10 2024 000007828 filed on April 9, 2024 (still secret at the priority date of this application). Further relevant background art is described in patent documents WO2024/062012A1, CN117642914A, and DE102018133004A1.

Therefore, there is a need for further improvements in this field.

### Object of the invention

The object of this invention is to provide an electric battery unit of the type indicated above, which is able to ensure an effective cooling action in the event of a malfunction that causes one or more cells of the battery unit to be in a thermal runaway condition.

In particular, the invention aims to ensure a drastic increase in the flow rate of the temperature-regulating liquid adjacent to the cell that is in a thermal runaway condition, despite the provision of said restricted passages that are interposed in the communication between the spaces between the cells and one of the inlet and outlet collector chambers for the temperature-regulating liquid.

Furthermore, a further object of the invention is to ensure a drastic increase in the cooling action at a cell that is in thermal runaway condition with an extremely reduced reaction time.

Finally, a further aim of the invention is to achieve all the above objectives with constructively simple and low-cost means.

### Summary of the invention

The subject matter of the present invention is defined by the attached claims. In order to achieve one or more of said purposes, the invention has as its object an electric battery unit having the features that have been indicated at the beginning of this description and further characterized in that each of said spacer frames interposed between the battery cells comprises at least one portion of the frame configured to break, or deform, or melt, as a result of a local temperature rise above a given temperature threshold and/or as a result of a local pressure rise above a given pressure threshold,
so as to open a communication passage between the space in which the spacer frame is arranged and one of said inlet and outlet collector chambers for the temperature-regulating liquid,
so that, in the event of a thermal runaway condition of a battery cell adjacent to said space, the consequent increase in temperature and/or pressure within said space result in an increase in the flow rate of the temperature-regulating liquid, through the communication passage thus created.

Thanks to the above-mentioned features, in the battery unit according to the invention, a possible thermal runaway condition of one or more battery cells can be limited, preventing its propagation to other cells, as it automatically determines a drastic increase in the flow rate of the temperature-regulating liquid adjacent to the cells that are in such a condition and which will be cooled further, preventing the propagation.

In a concrete example of application of a battery unit according to the invention to an electric-powered vehicle, such a condition can generate an immediate warning to the driver of the emergency situation, which puts the driver in a position to stop the vehicle and place himself in a safe condition.

In a preferred embodiment, the invention is applied to a battery unit in which the battery cells are prismatic cells, each having opposite main surfaces orthogonal to the direction of alignment of the cells. In such preferred embodiment, each spacer frame includes a horizontal strip separating the space between two battery cells from one of said inlet and outlet collector chambers and in which one or more of said restricted passages for the temperature-regulating liquid are formed. The horizontal strip of the spacer frame in which the restricted passages are formed is configured to break, or deform, or melt, as a result of a local temperature rise above a given temperature threshold and/or as a result of a local pressure rise above a given pressure threshold, so as to open said communication passage that creates an increase in the flow rate of the temperature-regulating liquid through the space adjacent to the failed cell.

In a preferred embodiment, each spacer frame has a multilayer structure, including a rigid layer in which said restricted passages for the temperature-regulating liquid are formed, and two elastic sealing layers, between which the rigid layer is interposed, which are in sealing contact with the main surfaces of the cells between which the spacer frame is interposed. In the case of this embodiment, the multilayer structure of each spacer frame comprises at least one upper horizontal strip, one lower horizontal strip and two side vertical strips which connect the upper strip and the lower strip to each other. One of said upper and lower strips has its intermediate layer defining one or more restricted passages for the temperature-regulating liquid and is configured with weakened portions capable of breaking, or deforming, or melting, as a result of a local temperature rise above a given temperature threshold and/or as a result of a local pressure rise above a given pressure threshold, so as to open said communication passage that creates an increase in the flow rate of the temperature-regulating liquid in the space adjacent to the failed cell. Again in said embodiment, said restricted passages for the temperature-regulating liquid are defined by slits formed in said intermediate layer of the upper strip or the lower strip. Preferably, the upper strip, or the lower strip, in which the restricted passages are formed, has one or more wider portions in which the intermediate layer of the strip has a slit defining the restricted passage and more restricted portions defining said weakened portions of the strip. Always preferably, each of said slits defining the restricted passages is configured to also act as an invitation to a deformation or breakage of the widest portion of the intermediate layer strip in which it is formed, in the event of an overpressure in the space between the cells.

### Detailed description of the invention

Further features and advantages of the invention will be apparent from the following description with reference to the attached drawings, provided purely by way of a limiting example, in which:
figure 1 illustrates a perspective view of an electric battery unit of the type to which this invention is applicable,
figure 2 is a perspective view of a prismatic cell, used in the battery unit of figure 1,
figure 3 is a sectional view in a longitudinal vertical plane of the battery unit of figure 1,
figure 4 is a further perspective view of the cells constituting the battery unit of figure 1, in which one of the cells has been removed to show a spacer strip arranged between one cell and the other,
figure 5 shows a series of diagrams illustrating, for each space between the cells of a battery unit according to the invention, the change in the flow rate of the temperature-regulating liquid as a function of time, in the event that one of the cells enters a thermal runaway condition, both with reference to a battery unit according to the prior art, and with reference to a battery unit according to the invention,
figure 6 is a perspective view of an exemplary embodiment of a spacer frame for a battery unit according to the invention,
figure 7 shows a front view and a side view of the spacer frame of figure 6,
figures 8, 9 are front views of one of the two external sealing layers forming part of the multilayer structure of the spacer frame of figure 6, and of the intermediate layer in which the restricted passages for communication of the space between two cells and the outlet collector chamber of the battery unit are formed,
figures 10-12 are partial perspective views on an enlarged scale of details of the spacer frame of the battery unit according to the invention,
figure 13 is a sectional view of the battery unit according to the invention, in the example using spacer frames of the type illustrated in figures 8-12,
figure 14 is a partial and partially sectioned perspective view of the battery unit in figure 13,
figures 15, 16 are sections similar to the section in figure 13 showing the principle of operation of the invention in the case of thermal runaway of a battery cell,
figures 17, 18 and 19, 20 show what happens in a battery unit in the case of thermal runaway of a battery cell, respectively in the case of a battery unit of a known type and in the case of a battery unit according to the invention,
figures 21, 22 are variants of figures 13, 14, which refer to a further embodiment in which the restricted passages are formed in the lower strip of each spacer frame,
figures 23, 24 are sectional views similar to those in figure 21 showing what happens in the embodiment illustrated therein in the case of thermal runaway of a battery cell,
figures 25, 26 and 27, 28 show what happens in the battery unit in the case of thermal runaway of a battery cell, respectively in the case of a solution without the system according to the invention (figures 25, 26) and in the case of a solution according to the embodiment of the invention which is illustrated in figures 21-24, and
figures 29-31 are a perspective view, a front view and a view of a detail on an enlarged scale of a spacer frame forming part of a further embodiment of this invention.

Figures 1-4, relating to a battery unit to which this invention is applicable, have already been described above.

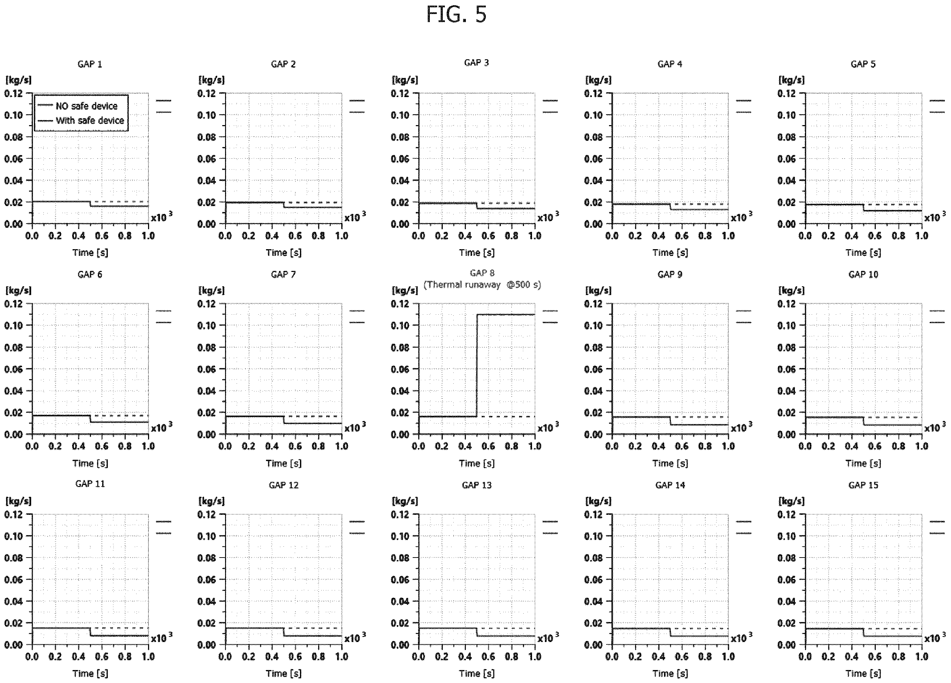

Figure 5 refers to the results of studies and experiments conducted by the Applicant with reference to this invention. Figure 5 refers to a battery unit which provides 15 spaces between the cells of the unit. Each of the diagrams in figure 5 refers to one of these spaces (identified with "GAP 1", "GAP2", ... "GAP15"). The diagrams show the change of the flow rate of the temperature-regulating liquid through each space between the cells as a result of the intervention of the device according to the invention. Figure 5 refers to the case in which the space identified as "GAP8" is adjacent to a cell that has entered a thermal runaway condition. In each of the diagrams of figure 5, the dotted line refers to the change of flow rate over time in the case of a battery unit according to the prior art, while the solid line refers to the change of flow rate in the case of a battery unit modified according to the teachings of this invention.

As can be seen, the result obtained thanks to the device according to the invention consists in a drastic increase in the flow rate of the temperature-regulating liquid in the GAP8, which allows to keep under control the thermal runaway of the failure cell. At the same time, the increase in flow rate in the GAP8 is compensated by a slight decrease in flow rate in each of the remaining spaces between the cells, which nevertheless ensures that the thermoregulation of all the cells continues to be maintained.

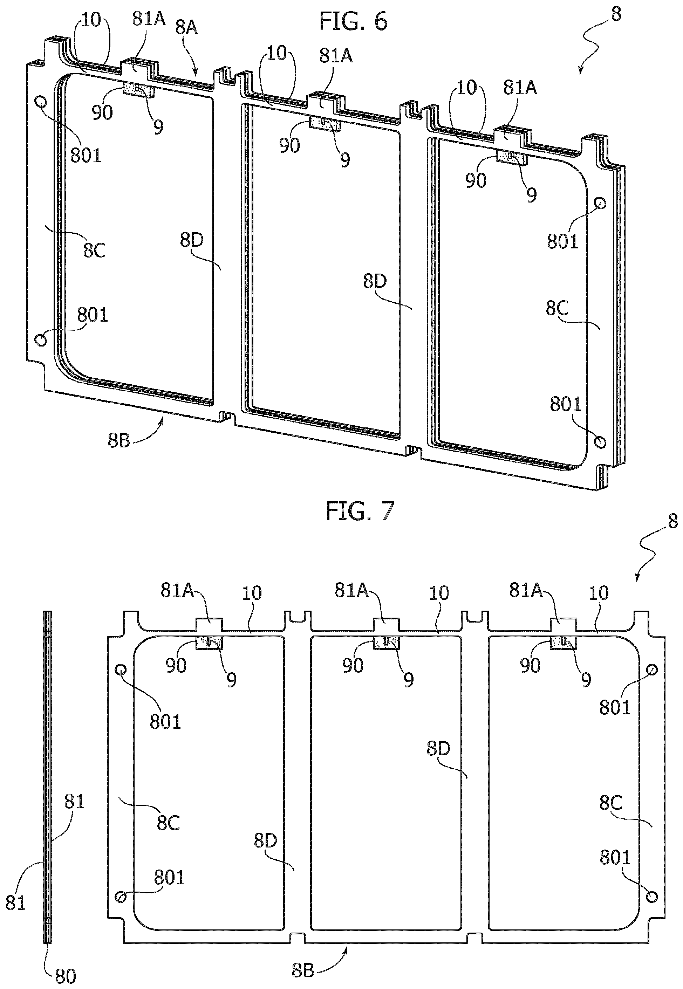

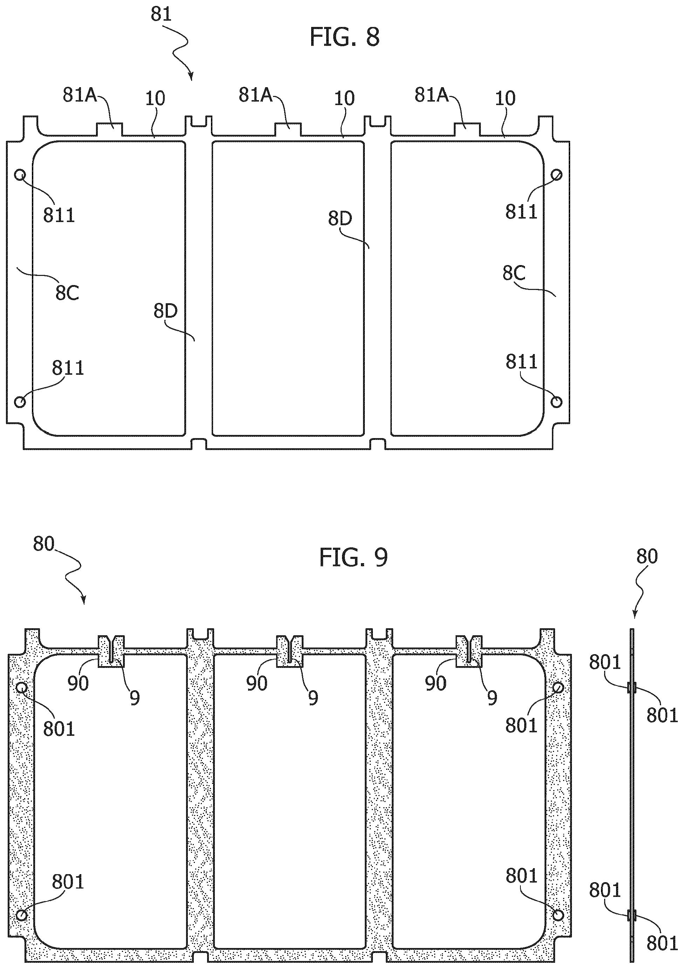

Figures 6-16 refer to a first embodiment of the invention. In this first embodiment, the restricted passages defined on each temperature-regulating frame for the temperature-regulating liquid are formed in an upper strip of the spacer frame, which separates the space between two cells from the outlet collector chamber of the battery unit.

Figure 6 shows a perspective view of a spacer frame 8 in the case of this first embodiment.

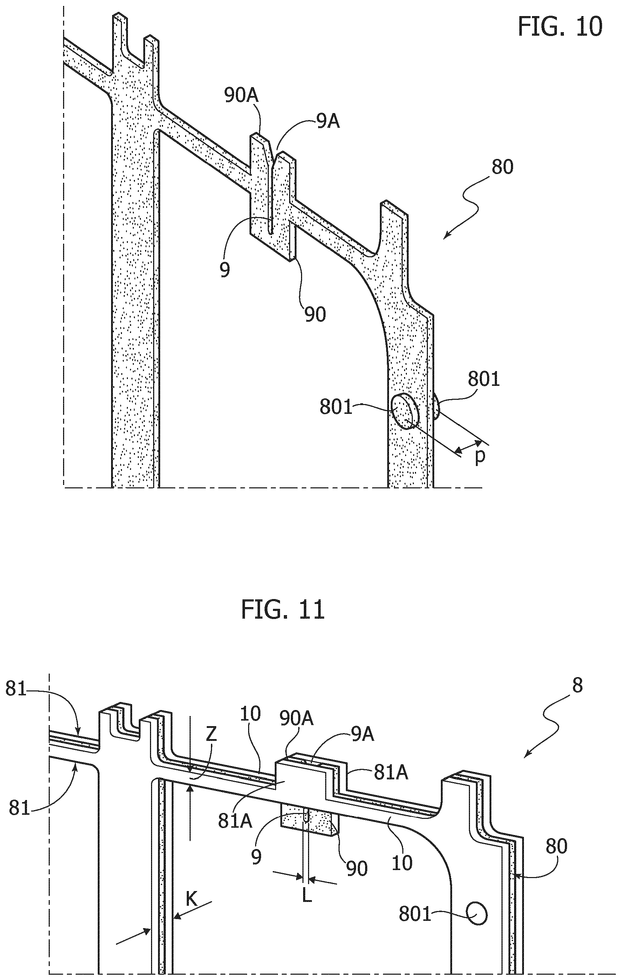

As better visible in figure 11, the entire spacer frame 8 has a multilayer structure, including a rigid intermediate layer 80, interposed between two elastic sealing layers 81.

The intermediate layer 80 may be made, for example, of a metal alloy with a relatively low melting temperature, or of a rigid polymeric material. The sealing layers 81 may be made, for example, of an elastomeric plastic material.

With reference to figures 6 and 10, 11, in the example illustrated, from the two opposite faces of the rigid intermediate layer 80 of each spacer frame 8 protrude projections 801 which are received within corresponding holes 811 of each elastic sealing layer 81. The projections 801 are in direct contact with the faces of the adjacent cells 2 and define the distance between the cells, corresponding to the dimension p (see figure 10) which is the distance between the external faces of the two projections 801 protruding from opposite faces of the intermediate layer 80 (figure 10). Therefore, the intermediate layer 80 defines the spacing between two adjacent cells, while the two external elastic layers 81 have the function of remaining pressed against the faces of the adjacent cells, ensuring the seal between these faces and the spacer frame.

With reference to figures 6, 7, the multilayer spacer frame 8 comprises, in the example illustrated, an upper horizontal strip 8A, a lower horizontal strip 8B, two side vertical strips 8C which join each other the ends of the upper strip 8A and the lower strip 8B, and two intermediate vertical strips 8D, arranged symmetrically with respect to the center of the frame, which join each other intermediate portions of the upper strip 8A and the lower strip 8B.

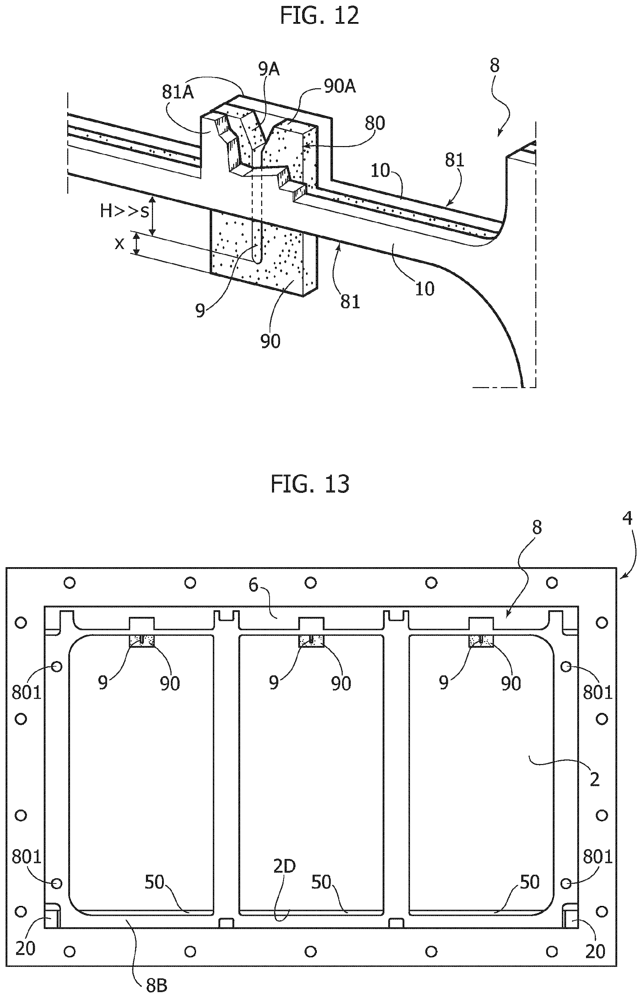

In this embodiment, the restricted passages 9 are defined by slits (figure 10) formed in the intermediate layer 80 at intermediate enlarged portions 90 of the upper horizontal strip 8A, having a greater height than the adjacent portions of the strip
With reference in particular to figure 10, each slit 9 extends from an upper edge 90A of the respective enlarged portion 90 with a flared mouth 9A and has the opposite lower end terminating with a blind bottom, at a distance x (figure 12) from the lower edge of the portion 90.

With reference to figure 11, each of the two external layers 81 also has a portion 81A at the enlarged portion 90 of the intermediate layer. The enlarged portion 81A of each outer layer 81 has an upper edge that is flush with the upper edge 90A of the enlarged portion 90 of the intermediate layer 80, while at the bottom it does not extend above the lower part of the enlarged portion 90, so that a lower end portion of the slit 9 remains uncovered. In this way, the space defined by the spacer frame 8 between two adjacent cells communicates with the outlet collector chamber, arranged above the cells, through the slit 9.

As visible in figures 6, 7, in the illustrated example, the upper horizontal strip 8A of the spacer frame 8 is arranged with three restricted passages defined by slits 9, formed at enlarged portions 90 of the intermediate layer 80.

Figure 13 shows a section of the battery unit at a spacer frame 8. As illustrated, the lower surface 2D of the cell 2 is held by supports 20 at a higher level than the lower strip 8B of the spacer frame. Therefore, the temperature-regulating liquid flowing into the inlet collector chamber 5 can pass freely through the passages indicated by 50 in the space between the two cells in which the spacer frame 8 is arranged. The temperature-regulating liquid can therefore invade the entire space between the two cells and then flow into the outlet collector chamber 6 passing through the restricted passages defined by the slits 9, formed in the intermediate layer 80 of the spacer frame 8.

Again, with reference to figure 6, it can be observed that both the intermediate layer 80 and the external layers 81 have, along the upper horizontal strip 8A, restricted and weakened portions 10 that support the enlarged portions 90 and 81A of the intermediate layer 80 and the external layers 81
According to the invention, the material of the intermediate layer 80, the configuration of the weakened portions 10 (in particular the dimension Z indicated in figure 11) and the dimension X indicated in figure 12 are chosen in such a way that the weakened portions 10 are subjected to deformation or breakage or melting as a result of a thermal runaway of an adjacent cell.

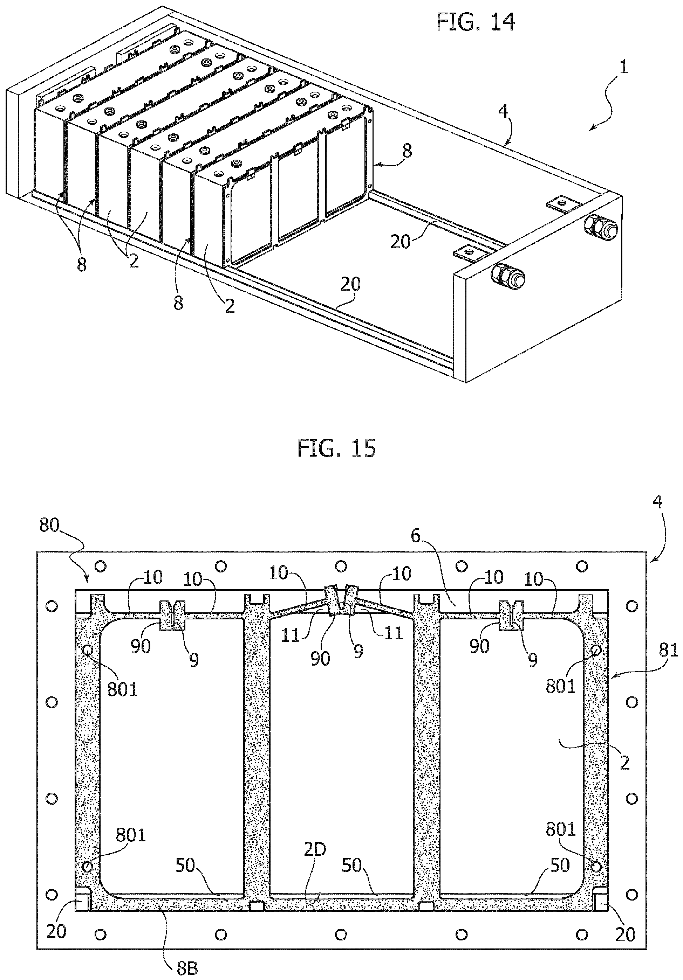

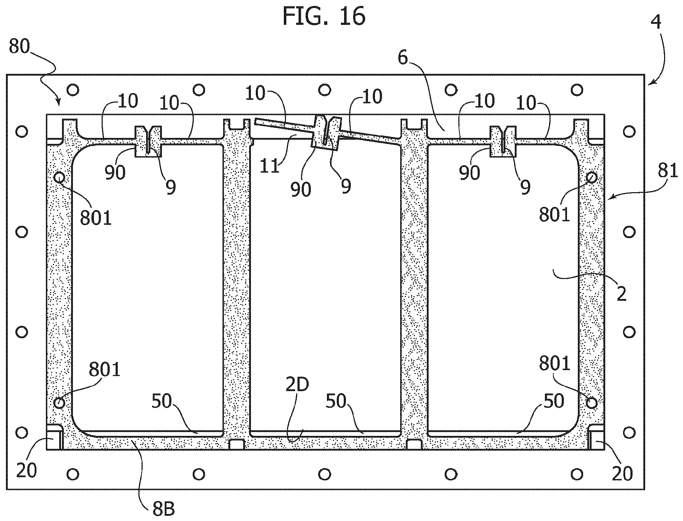

Figures 15, 16 show two possible deformations/breakages that can occur in this case. Figure 15 shows a case where the portion 90 of the intermediate layer 80, in which a slit 9 is formed, deforms symmetrically with the slit 9 opening with a hinge-like movement. In this case, additional passage areas for the temperature-regulating liquid are created which determine a drastic increase in the flow rate of the temperature-regulating liquid, which is no longer forced to pass through the restricted passage defined by the original slit 9.

The same result occurs in the case of an event of the type illustrated in figure 16, in which one end of the weakened portion 10 detaches from the adjacent portion of the upper strip 8A of the spacer frame.

Referring again to figures 10, 11, the intermediate layer 80 has a thickness "s", for example equal to approximately 1 mm, and the slit 9 has a width L equal to for example 0.5-1 mm. In a normal operating condition, therefore, each restricted passage defined by a slit 9 has a minimum passage section equal to: A = s × L (since the length of the slit 9 that is not covered by the external layers 81 is much longer than the dimension s).

As already indicated, the dimension Z indicated in figure 11 and the dimension x in figure 12 are chosen in such a way as to determine the breakage or deformation of such weakened portions in the critical conditions determined by a thermal runaway of the adjacent cell.

In addition or alternatively, the material of the intermediate layer 80 can be chosen with a melting temperature lower than the threshold of interest, so as to create the communication passage for the temperature-regulating liquid as a result of a disintegration of one or more portions of the layer 80.

The total thickness K of the frame 8 (figure 11) is chosen such that, in the assembled condition, the external layers 81 are subjected to a deformation that gives rise to a contact pressure with the cells tending to prevent the swelling effect to which the cells are subjected during use.

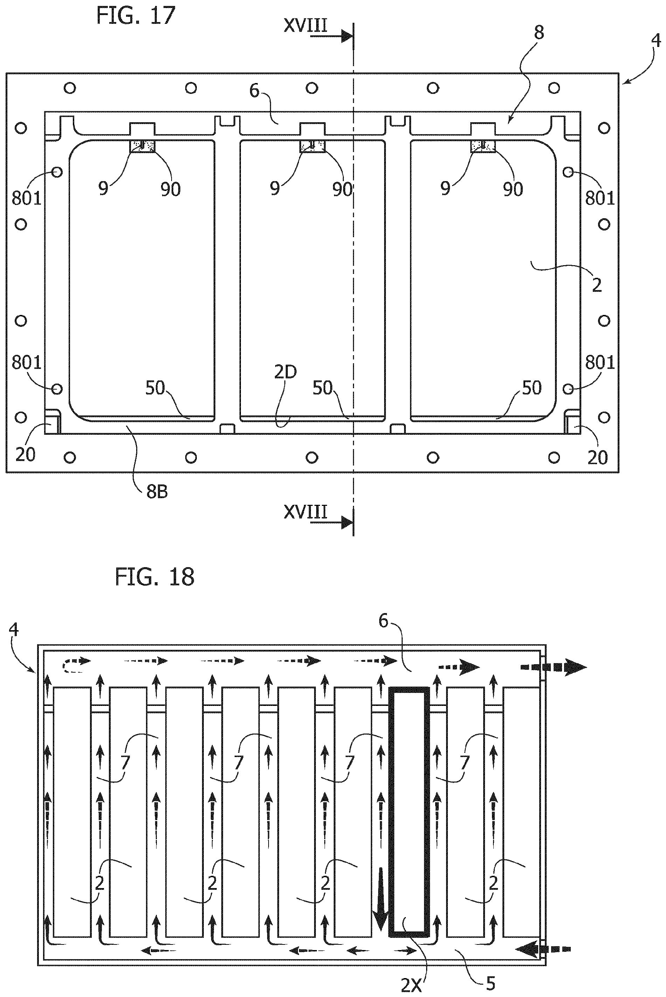

Figure 17 is a sectional view in a transverse plane of a battery unit that is not provided with the system according to the invention, so that, in the event of thermal runaway, no portion of the spacer frame 8 is subjected to breakage or deformation or melting.

Figure 18, which is a section along the line XVIII-XVIII in figure 17 shows what happens in the case that a cell 2X is subjected to a thermal runaway. Since the communication between the space 7 adjacent to the cell and the outlet collector chamber 6 is limited to the restricted passages 9, the hot gas exiting the cell 2X, in the event of a failure, can only flow into the lower inlet collector 5. The pressure in the space 7 adjacent to the cell 2X and in the inlet collector chamber 5 is higher than the pressure in the outlet collector chamber 6 above the cells. As a result, the flow rate of the temperature-regulating liquid into the inlet collector chamber 5 decreases. Furthermore, the pressure increase may be increased due to the fact that the communication with the outlet collector chamber 6 is limited by the restricted passages. In such a situation, the hot gas from the failed cell also enters the other spaces 7, heating the other cells 2. The hot gas exits through the restricted passages associated with the other spaces between the cells, but the evacuation of gas from the battery unit may take a considerable time.

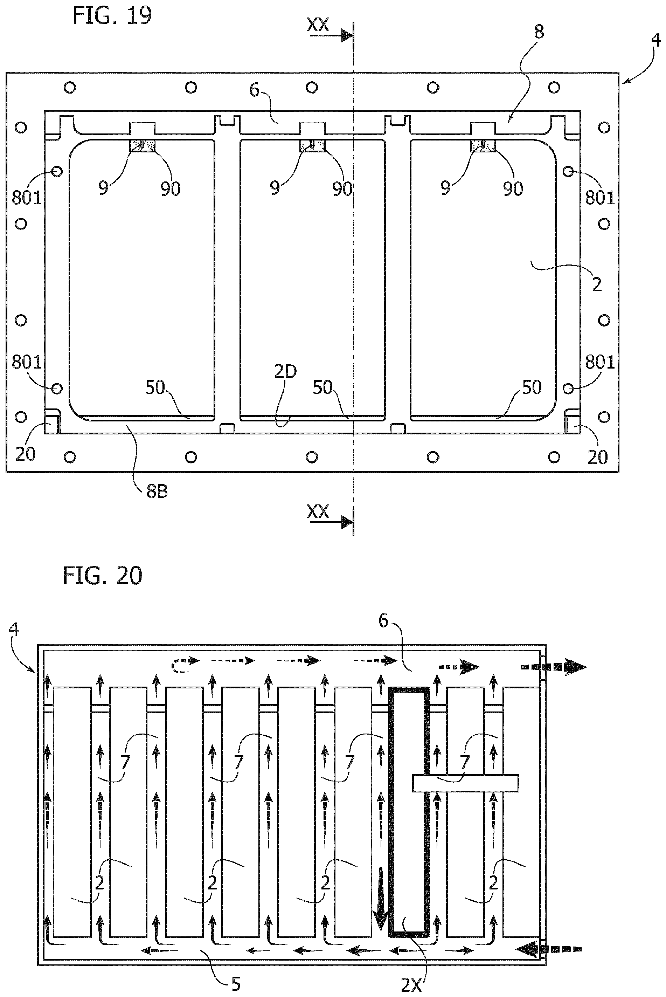

Figures 19, 20 are figures corresponding to figures 17, 18, but show what occurs in the case of the embodiment of the invention that has been described above, with the restricted passages 9 associated with the upper horizontal strip of each spacer frame. In this case, when a thermal runaway condition of the cell 2X occurs, the spacer frame 8 adjacent to it undergoes a break or a deformation or a melting in its upper part, so that the hot gases exiting the cell can escape directly into the outlet collector chamber 6. The pressure in the space 7 adjacent to the cell 2X in the lower collector chamber 5 is the same as that in the upper collector chamber 6. The other spacer frames 8 are not subjected to break or deformation or melting and the flow rate of the temperature-regulating liquid is concentrated mainly in the space 7 adjacent to the damaged cell 2X. The hot gas arriving in the upper collector chamber 6 cannot enter the spaces 7 between the other cells because the pressure difference upstream and downstream of the other restricted passages is zero. The flow rate of the temperature-regulating liquid through the other spaces 7 between the cells helps to reduce the thermal power transmitted to the other cells.

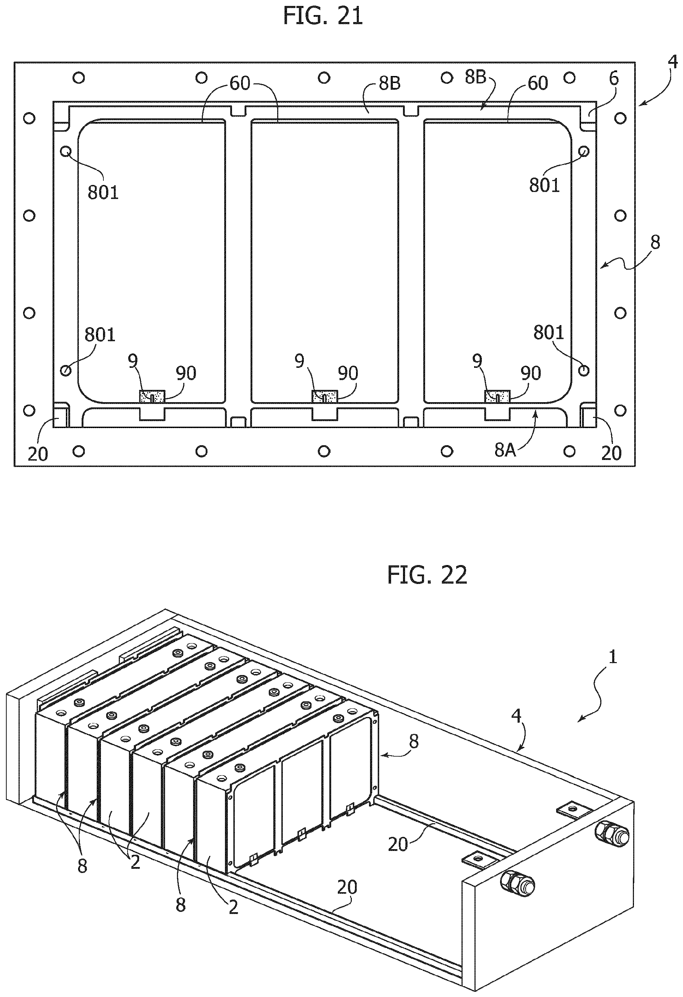

Figures 21-24 are variations of Figures 13-16, relating to a second embodiment. In this second embodiment, each spacer frame 8 is made with exactly the same structure and configuration as illustrated above with reference to figures 6-16. However, in this second embodiment, each spacer frame 8 is in an inverted position with respect to that of the first embodiment. In this case, therefore, the horizontal strip 8A containing the restricted passages 9 is the strip located below, adjacent to the inlet collector chamber 5. In this case, therefore, under normal operating conditions, the inlet collector chamber 5 communicates with the space between two cells only through the restricted passages 9, defined by the spacer frame 8 placed between the cells, while the same space between the cells communicates freely through passages 60 (figure 21) with the upper collector chamber 6, since the upper flat surface of the cell 2 is at a lower level than the horizontal strip 8B of the spacer frame, which in this case is the upper strip.

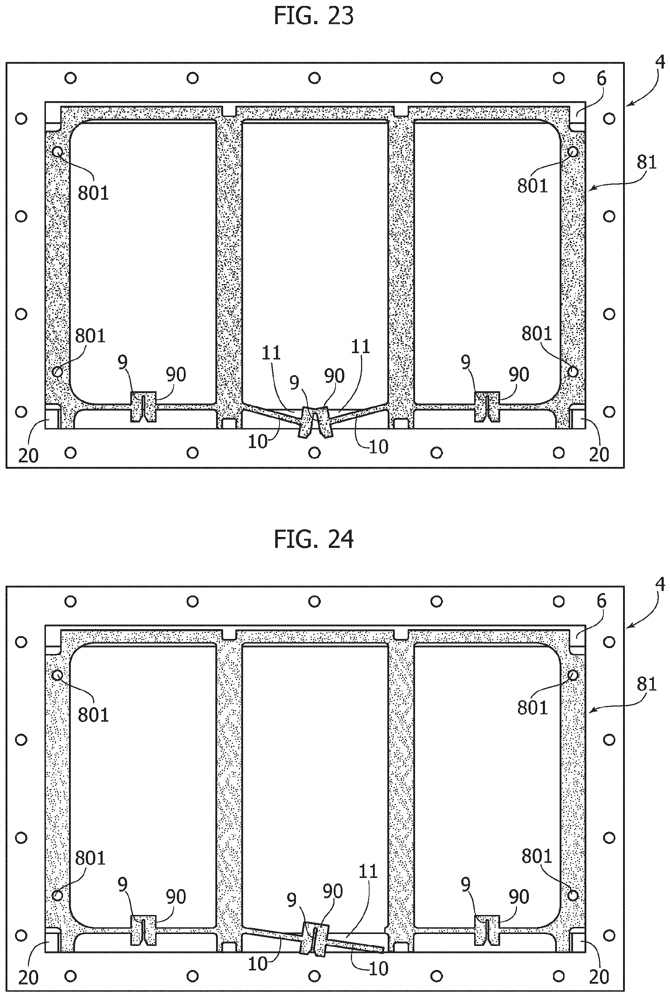

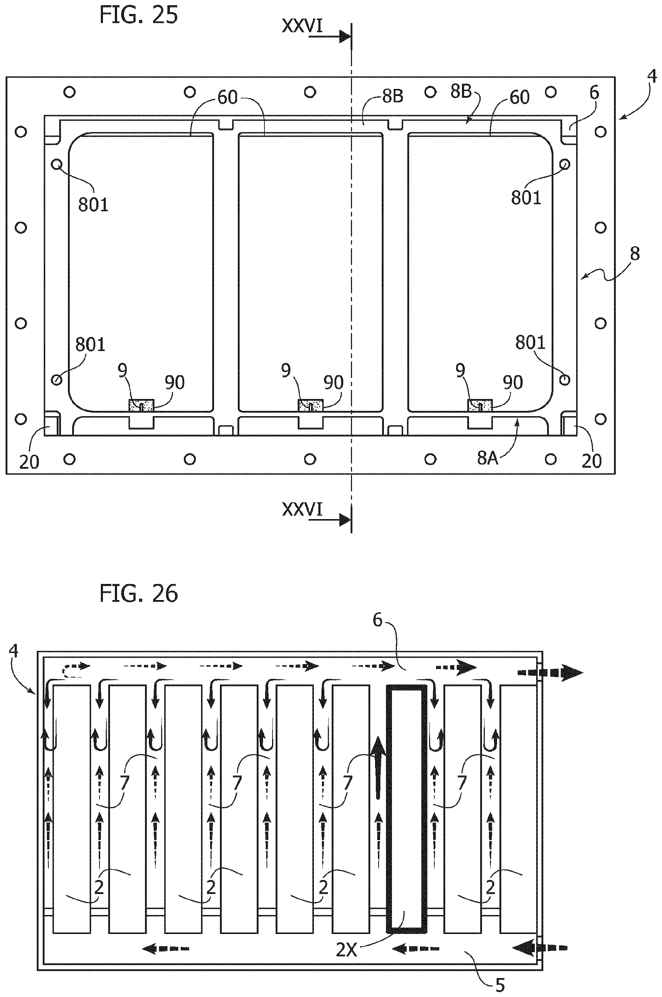

In the case of this second embodiment, portions of the lower strip of the spacer frame 8 (see figures 23, 24) are therefore subjected to deformation, or breakage or melting in the case of thermal runaway of the adjacent cell, so as to create a communication passage much wider than that previously offered by the restricted passages 9, so that the flow rate of the temperature-regulating liquid in the space adjacent to the cell in thermal runaway can increase drastically, keeping the temperature of the cell below a threshold level and avoiding a chain reaction propagation of the thermal runaway to the other cells. The above is evident from figures 25-28 of the attached drawings.

Again, figures 25, 26 show what happens in the case of a battery unit not provided with the safety system according to the invention. Figure 25 is a sectional view in a plane orthogonal to the alignment direction of the cells 2, while figure 26 is a schematic sectional view along the line XXVI-XXVI of Figure 25.

With particular reference to figure 26, in a battery unit that is not provided with the system according to the invention, when a cell 2X enters a thermal runaway condition, the lower portion of the spacer frame 8 adjacent to it, having the restricted passages 9, is not subjected to breakage, deformation or melting. In this condition, the hot gas exiting the failed cell 2X can only fill the upper collector chamber 6. The pressure in the space 7 adjacent to the failed cell and the pressure in the upper collector chamber 6 is higher than that in the lower collector chamber 5. As a result, the flow rate of the temperature-regulating liquid decreases and does not produce a cooling effect on the other cells 2. The increase in pressure also causes hot gas to enter the other spaces 7 between the cells, heating the other cells as well, which can lead to a propagation of the thermal runaway condition, with a chain effect, to all the other cells, thus triggering an irreversible phenomenon.

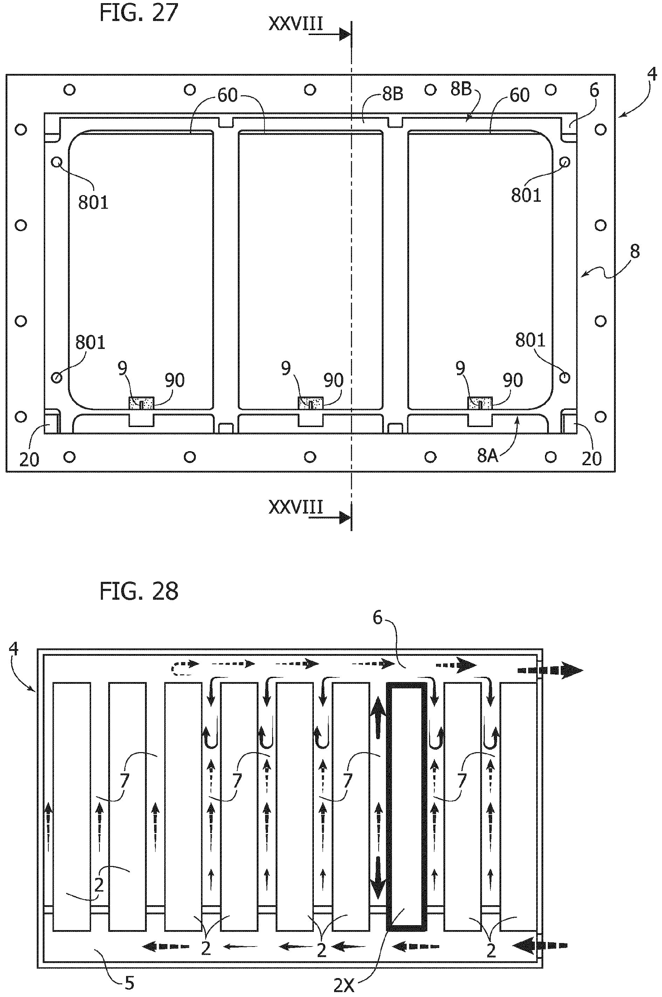

Figures 27, 28 are figures corresponding to figures 25, 26, showing what happens in the event that a cell 2X enters a thermal runaway condition in a battery unit according to the second embodiment of the invention that has been described above. Again, figure 27 is a sectional view of the battery unit in a plane orthogonal to the direction of cell alignment, and figure 28 is a schematic sectional view along line XXVIII-XXVIII of figure 27.

With particular reference to figure 28, if cell 2X enters a thermal runaway condition, the lower portion of spacer frame 8 adjacent to it undergoes a deformation or breakage or melting such as to open a communication passage with the lower collector chamber 5 much larger than that previously offered by the restricted passages 9. In this condition, the hot gases exiting cell 2X can also flow into the lower collector chamber 5. The pressure in GAP 7 adjacent to cell 2X and in the upper collector chamber 6 is equal to that in the lower collector chamber 5. Therefore, the other spacer frames 8 do not break and the flow rate of the temperature-regulating liquid flows almost entirely into the space 7 adjacent to damaged cell 2X. The hot gas that can enter the other spaces 7 between the cells from the upper collector chamber 6 is therefore in lower quantity than in the case where the wide communication between the space adjacent to the damaged cell and the lower collector chamber 5 is not opened.

The hot gas that fills the lower collector chamber 5 can only pass through the restricted passages 9 associated with the other spaces between the cells and therefore flows into the spaces between the other cells in minimal quantity. Consequently, the hot gas that fills the lower collector chamber 5 touches the other cells 2 on a reduced surface, so it contributes minimally to their heating. The low flow rate of hot gas that passes through the restricted passages associated with the other cells and the reduced quantity of hot gas that enters the spaces between the other cells from the upper collector chamber leads to a reduction in the thermal power transmitted to the other cells 2 of the unit. Therefore, most of the gas produced by the failed cell flows directly to the outlet through the outlet collector chamber 6.

Of course, the specific configuration and structure of the spacer frame 8 described here is intended as a non-limiting example. Any other structure and configuration capable of leading to a breakage or deformation or melting of a portion of the frame as a result of an increase in temperature and/or pressure above a given threshold, such as to open a communication passage significantly larger than that constituted by the narrow and defined passages in the frame under normal operating conditions, may be adopted. In other words, the principle underlying the invention is to make the spacer frames between the cells of the battery unit in such a way that under normal operating conditions the communication between the space in which each spacer frame is arranged and one of the inlet and outlet collector chambers is defined solely by one or more restricted passages, while in the event of a thermal runaway of an adjacent cell, with consequent increase in temperature and/or pressure above a given threshold, one or more portions of the spacer frame break, or deform, or melt, so as to open a new communication passage significantly larger than said restricted passages, so that most of the flow rate of the temperature-regulating liquid passing through the battery unit is encouraged to flow through the space adjacent to the failed cell, which allows that cell to be kept under thermal control and above all to avoid heat transmission to the other cells of the unit.

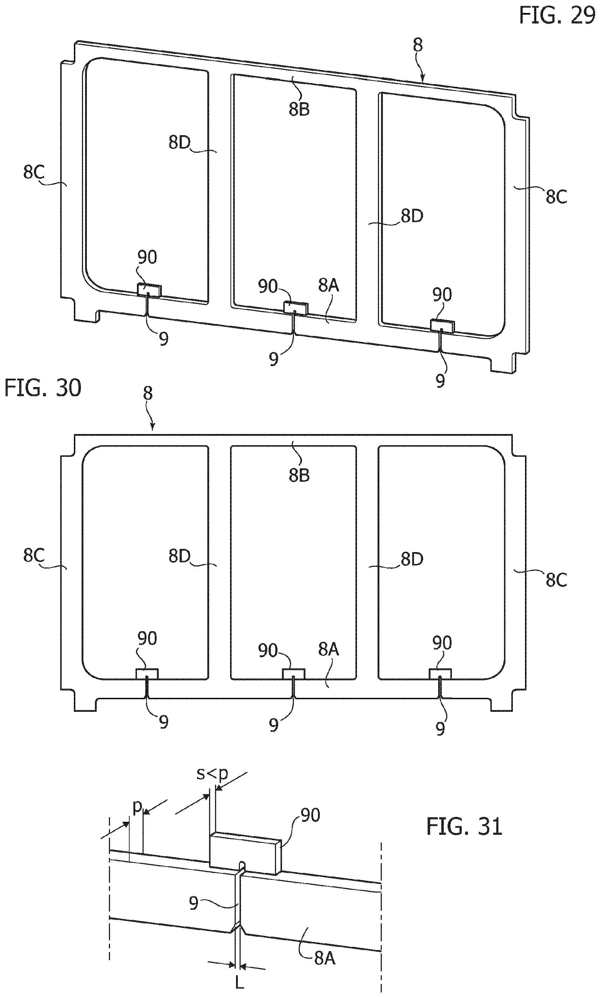

As an example, figures 29-31 show an alternative embodiment of the spacer frame 8, wherein the frame 8 has a one-piece structure made of a single material (e.g. a low-melting point metal alloy). The frame 8 has a constant thickness of p along the peripheral strips 8A, 8B and 8C and along the intermediate strips 8D. The dimension p therefore defines the spacing between the cells separated by the frame. The strip 8A, which in the example is the lower horizontal strip, carrying the slits 9 that define the restricted passages, has protruding portions 90 at each slit having a thickness s less than p, in which the slits 9 extend. In this way each slit 9 puts the lower collecting chamber in communication with the space between the cells 2. The minimum section area of the passage thus defined is equal to the product L × (p-s), where L is the width of the slit 9.

Of course, notwithstanding the principle of the invention, the construction details and the embodiments may vary widely with respect to what is described purely by way of example, without thereby departing from the scope of this invention, as defined in the attached claims.

## Claims

1. An electric battery unit (1), comprising an array of battery cells (2), disposed within a container (4) of the battery unit (1) and configured to be in direct contact with a flow of a temperature-regulating liquid passing through the container (4) for maintaining the battery unit (1) within a specified temperature range,
wherein said container (4) includes an inlet opening (5A) for the temperature-regulating liquid, communicating with an inlet collector chamber (5) and an outlet opening (6A) for the temperature-regulating liquid, communicating with an outlet collector chamber (6),
wherein the battery cells (2) are spaced from each other by spacer frames (8) that define spaces (7) between the battery cells (2), which connect the inlet collector chamber (5) and the outlet collector chamber (6) to each other,
wherein each space (7) between the battery cells (2) communicates with the inlet collector chamber (5) and/or the outlet collector chamber (6) via one or more restricted passages (9) for the temperature-regulating liquid, formed in the respective spacer frame (8) and configured to generate sufficient resistance to the passage of the temperature-regulating liquid to prevent the temperature-regulating liquid from tending to flow to a greater extent into the spaces (7) that are closer to the inlet opening (5A) and/or the outlet opening (6A) of the container (4),
said battery unit (1) being **characterized in that** each spacer frame (8) comprises at least one portion of the frame (10) configured to break or deform or melt as a result of a local temperature rise above a given temperature threshold and/or as a result of a local pressure rise above a given pressure threshold,
so as to open a communication passage (11) between the space (7) in which the spacer frame is arranged and one of said inlet and outlet collector chambers (5, 6),
so that, in the event of a thermal runaway condition of a battery cell (2) adjacent to said space, the consequent rise in temperature and/or pressure within said space (7) result in an increase in the flow rate of the temperature-regulating liquid, through the communication passage (11) thus created.

2. The battery unit according to claim 1, wherein the battery cells (2) are prismatic cells, each having opposite main surfaces (2B) orthogonal to the direction (X) of alignment of the cells (2).

3. The battery unit according to claim 2, **characterized in that** each spacer frame (8) includes a horizontal strip (8A) separating the space between two battery cells (2) from one of said inlet and outlet collector chambers (5, 6), **in that** one or more of said restricted passages (9) for the temperature-regulating liquid are formed in said horizontal strip (8A) and **in that** the horizontal strip (8A) is configured to break or deform or melt as a result of a local temperature rise above a given temperature threshold and/or as a result of a local pressure rise above a given pressure threshold, so as to open said communication passage creating a flow increase through the space (7).

4. The battery unit according to claim 3, **characterized in that** each spacer frame (8) has a multilayer structure, including a rigid layer (80) in which there are formed said restricted passages (9) for the temperature-regulating liquid, and two elastic sealing layers (81), between which said rigid layer (80) is interposed, and which are in sealing contact with the main surfaces (2P) of the cells (2) between which the spacer frame (8) is interposed.

5. The battery unit according to claim 4, **characterized in that** the multilayer structure of each spacer frame (8) comprises two horizontal strips (8A, 8B), joined together by two vertical strips (8C), **in that** one of said horizontal strips (8A) has its intermediate layer (80) defining one or more restricted passages (9) for the temperature-regulating liquid and is configured with weakened portions (10) capable of breaking or deforming or melting as a result of a local temperature rise above a given temperature threshold and/or as a result of a local pressure rise above a given pressure threshold, in such a way as to open said communication passage that creates an increase in the flow rate of the temperature-regulating liquid, which is no longer restricted by said restricted passages (9).

6. The battery unit according to claim 5, **characterized in that** the restricted passages (9) for the temperature-regulating liquid are defined by slits formed in the intermediate layer (80) of said horizontal strip (8A).

7. The battery unit according to claim 6, **characterized in that** said horizontal strip (8A) in which the restricted passages (9) are formed has one or more enlarged portions (90, 81A) in which the intermediate layer (80) of the strip has a slit (9) defining the restricted passage, and portions of a lower width (10) defining said weakened portions.

8. The battery unit according to claim 7, **characterized in that** said slit (9) is configured to also act as an invitation to a deformation or rupture of the intermediate layer (80) in which it is formed, in the event of a pressure rise in the space (7) between the cells above a predetermined threshold value.

9. The battery unit according to claim 1, **characterized in that** said horizontal strip (8A) whose intermediate layer (80) defines the restricted passages (9) is a lower strip of the spacer frame (8) adjacent to a lower collector chamber (5) or is an upper strip of the spacer frame (8), adjacent to an upper collector chamber (6).

10. The battery unit according to claim 1, **characterized in that** each spacer frame has a one-piece structure made of a single material.

## Patentansprüche

1. Elektrisches Batteriemodul (1), umfassend eine Anordnung von Batteriezellen (2), die innerhalb eines Behälters (4) des Batteriemoduls (1) angeordnet und dazu konfiguriert sind, in direktem Kontakt mit einem Strom einer temperaturregelnden Flüssigkeit zu stehen, die durch den Behälter (4) strömt, um das Batteriemodul (1) innerhalb eines bestimmten Temperaturbereichs zu halten,
wobei besagter Behälter (4) eine Einlassöffnung (5A) für die temperaturregelnde Flüssigkeit, die mit einer Einlasssammelkammer (5) in Verbindung steht, und eine Auslassöffnung (6A) für die temperaturregelnde Flüssigkeit umfasst, die mit einer Auslasssammelkammer (6) in Verbindung steht,
wobei die Batteriezellen (2) durch Abstandshalterrahmen (8) voneinander beabstandet sind, die Räume (7) zwischen den Batteriezellen (2) definieren, welche die Einlasssammelkammer (5) und die Auslasssammelkammer (6) miteinander verbinden,
wobei jeder Raum (7) zwischen den Batteriezellen (2) mit der Einlasssammelkammer (5) und/oder der Auslasssammelkammer (6) über einen oder mehrere eingeschränkte Durchgänge (9) für die temperaturregelnde Flüssigkeit in Verbindung steht, die in dem jeweiligen Abstandshalterrahmen (8) ausgebildet und dazu konfiguriert sind, einen ausreichenden Widerstand gegen den Durchtritt der temperaturregelnden Flüssigkeit zu erzeugen, um zu verhindern, dass die temperaturregelnde Flüssigkeit dazu neigt, in größerem Maße in die Räume (7) zu strömen, die näher an der Einlassöffnung (5A) und/oder der Auslassöffnung (6A) des Behälters (4) liegen,
besagtes Batteriemodul (1) **dadurch gekennzeichnet, dass** jeder Abstandshalterrahmen (8) mindestens einen Abschnitt des Rahmens (10) umfasst, der dazu konfiguriert ist, als Folge eines lokalen Temperaturanstiegs über eine bestimmte Temperaturschwelle und/oder als Folge eines lokalen Druckanstiegs über eine bestimmte Druckschwelle zu brechen oder sich zu verformen oder zu schmelzen,
um so einen Kommunikationsdurchgang (11) zwischen dem Raum (7), in dem der Abstandshalterrahmen angeordnet ist, und einer der genannten Einlass- und Auslasssammelkammern (5, 6) zu öffnen,
so dass im Falle eines thermischen Durchgehens einer an besagten Raum angrenzenden Batteriezelle (2) der daraus resultierende Anstieg der Temperatur und/oder des Drucks innerhalb besagten Raums (7) zu einer Erhöhung der Strömungsrate der temperaturregelnden Flüssigkeit durch den so geschaffenen Kommunikationsdurchgang (11) führt.

2. Batteriemodul nach Anspruch 1, wobei die Batteriezellen (2) prismatische Zellen sind, die jeweils gegenüberliegende Hauptflächen (2B) orthogonal zur Ausrichtungsrichtung (X) der Zellen (2) aufweisen.

3. Batteriemodul nach Anspruch 2, **dadurch gekennzeichnet, dass** jeder Abstandshalterrahmen (8) einen horizontalen Streifen (8A) umfasst, der den Raum zwischen zwei Batteriezellen (2) von einer der genannten Einlass- und Auslasssammelkammern (5, 6) trennt, dass einer oder mehrere der genannten eingeschränkten Durchgänge (9) für die temperaturregelnde Flüssigkeit in besagtem horizontalen Streifen (8A) ausgebildet sind und dass der horizontale Streifen (8A) dazu konfiguriert ist, als Folge eines lokalen Temperaturanstiegs über eine bestimmte Temperaturschwelle und/oder als Folge eines lokalen Druckanstiegs über eine bestimmte Druckschwelle zu brechen oder sich zu verformen oder zu schmelzen, um so besagten Kommunikationsdurchgang zu öffnen, der eine Strömungserhöhung durch den Raum (7) erzeugt.

4. Batteriemodul nach Anspruch 3, **dadurch gekennzeichnet, dass** jeder Abstandshalterrahmen (8) einen mehrschichtigen Aufbau aufweist, umfassend eine starre Schicht (80), in der die genannten eingeschränkten Durchgänge (9) für die temperaturregelnde Flüssigkeit ausgebildet sind, und zwei elastische Dichtungsschichten (81), zwischen denen besagte starre Schicht (80) angeordnet ist und die in dichtendem Kontakt mit den Hauptflächen (2P) der Zellen (2) stehen, zwischen denen der Abstandshalterrahmen (8) angeordnet ist.

5. Batteriemodul nach Anspruch 4, **dadurch gekennzeichnet, dass** der mehrschichtige Aufbau jedes Abstandshalterrahmens (8) zwei horizontale Streifen (8A, 8B) umfasst, die durch zwei vertikale Streifen (8C) miteinander verbunden sind, dass einer der genannten horizontalen Streifen (8A) mit seiner Zwischenschicht (80) einen oder mehrere eingeschränkte Durchgänge (9) für die temperaturregelnde Flüssigkeit definiert und mit geschwächten Abschnitten (10) konfiguriert ist, die als Folge eines lokalen Temperaturanstiegs über eine bestimmte Temperaturschwelle und/oder als Folge eines lokalen Druckanstiegs über eine bestimmte Druckschwelle brechen oder sich verformen oder schmelzen können, derart, dass besagter Kommunikationsdurchgang geöffnet wird, der eine Erhöhung der Strömungsrate der temperaturregelnden Flüssigkeit erzeugt, die nicht länger durch die genannten eingeschränkten Durchgänge (9) eingeschränkt ist.

6. Batteriemodul nach Anspruch 5, **dadurch gekennzeichnet, dass** die eingeschränkten Durchgänge (9) für die temperaturregelnde Flüssigkeit durch Schlitze definiert sind, die in der Zwischenschicht (80) des genannten horizontalen Streifens (8A) ausgebildet sind.

7. Batteriemodul nach Anspruch 6, **dadurch gekennzeichnet, dass** besagter horizontaler Streifen (8A), in dem die eingeschränkten Durchgänge (9) ausgebildet sind, einen oder mehrere erweiterte Abschnitte (90, 81A) aufweist, in denen die Zwischenschicht (80) des Streifens einen Schlitz (9) aufweist, der den eingeschränkten Durchgang definiert, und Abschnitte geringerer Breite (10), die die genannten geschwächten Abschnitte definieren.

8. Batteriemodul nach Anspruch 7, **dadurch gekennzeichnet, dass** besagter Schlitz (9) dazu konfiguriert ist, im Falle eines Druckanstiegs in dem Raum (7) zwischen den Zellen über einen vorbestimmten Schwellenwert hinaus auch als Einladung zu einer Verformung oder einem Bruch der Zwischenschicht (80), in der er ausgebildet ist, zu wirken.

9. Batteriemodul nach Anspruch 1, **dadurch gekennzeichnet, dass** besagter horizontaler Streifen (8A), dessen Zwischenschicht (80) die eingeschränkten Durchgänge (9) definiert, ein unterer Streifen des Abstandshalterrahmens (8) ist, der an eine untere Sammelkammer (5) angrenzt, oder ein oberer Streifen des Abstandshalterrahmens (8) ist, der an eine obere Sammelkammer (6) angrenzt.

10. Batteriemodul nach Anspruch 1, **dadurch gekennzeichnet, dass** jeder Abstandshalterrahmen einen einstückigen Aufbau aus einem einzigen Material aufweist.

## Revendications

1. Module de batterie électrique (1), comprenant un réseau de cellules de batterie (2), disposées à l'intérieur d'un conteneur (4) du module de batterie (1) et configurées pour être en contact direct avec un flux d'un liquide de régulation de température traversant le conteneur (4) pour maintenir le module de batterie (1) dans une plage de température spécifiée,
dans lequel ledit conteneur (4) inclut une ouverture d'admission (5A) pour le liquide de régulation de température, communiquant avec une chambre collectrice d'admission (5) et une ouverture de sortie (6A) pour le liquide de régulation de température, communiquant avec une chambre collectrice de sortie (6),
dans lequel les cellules de batterie (2) sont espacées les unes des autres par des cadres d'espacement (8) qui définissent des espaces (7) entre les cellules de batterie (2), lesquels relient la chambre collectrice d'admission (5) et la chambre collectrice de sortie (6) l'une à l'autre,
dans lequel chaque espace (7) entre les cellules de batterie (2) communique avec la chambre collectrice d'admission (5) et/ou la chambre collectrice de sortie (6) par l'intermédiaire d'un ou plusieurs passages restreints (9) pour le liquide de régulation de température, formés dans le cadre d'espacement respectif (8) et configurés pour générer une résistance suffisante au passage du liquide de régulation de température pour empêcher le liquide de régulation de température de tendre à s'écouler dans une plus grande mesure dans les espaces (7) qui sont plus proches de l'ouverture d'admission (5A) et/ou de l'ouverture de sortie (6A) du conteneur (4),
ledit module de batterie (1) étant **caractérisé en ce que** chaque cadre d'espacement (8) comprend au moins une partie du cadre (10) configurée pour se rompre ou se déformer ou fondre à la suite d'une élévation de température locale au-dessus d'un seuil de température donné et/ou à la suite d'une élévation de pression locale au-dessus d'un seuil de pression donné,
de manière à ouvrir un passage de communication (11) entre l'espace (7) dans lequel le cadre d'espacement est disposé et l'une desdites chambres collectrices d'admission et de sortie (5, 6),
de sorte que, en cas de condition d'emballement thermique d'une cellule de batterie (2) adjacente audit espace, l'élévation consécutive de température et/ou de pression à l'intérieur dudit espace (7) entraîne une augmentation du débit du liquide de régulation de température, à travers le passage de communication (11) ainsi créé.

2. Module de batterie selon la revendication 1, dans lequel les cellules de batterie (2) sont des cellules prismatiques, chacune ayant des surfaces principales opposées (2B) orthogonales à la direction (X) d'alignement des cellules (2).

3. Module de batterie selon la revendication 2, **caractérisé en ce que** chaque cadre d'espacement (8) inclut une bande horizontale (8A) séparant l'espace entre deux cellules de batterie (2) de l'une desdites chambres collectrices d'admission et de sortie (5, 6), **en ce qu'**un ou plusieurs desdits passages restreints (9) pour le liquide de régulation de température sont formés dans ladite bande horizontale (8A) et **en ce que** la bande horizontale (8A) est configurée pour se rompre ou se déformer ou fondre à la suite d'une élévation de température locale au-dessus d'un seuil de température donné et/ou à la suite d'une élévation de pression locale au-dessus d'un seuil de pression donné, de manière à ouvrir ledit passage de communication créant une augmentation de débit à travers l'espace (7).

4. Module de batterie selon la revendication 3, **caractérisé en ce que** chaque cadre d'espacement (8) a une structure multicouche, incluant une couche rigide (80) dans laquelle sont formés lesdits passages restreints (9) pour le liquide de régulation de température, et deux couches d'étanchéité élastiques (81), entre lesquelles ladite couche rigide (80) est interposée, et qui sont en contact d'étanchéité avec les surfaces principales (2P) des cellules (2) entre lesquelles le cadre d'espacement (8) est interposé.

5. Module de batterie selon la revendication 4, **caractérisé en ce que** la structure multicouche de chaque cadre d'espacement (8) comprend deux bandes horizontales (8A, 8B), reliées ensemble par deux bandes verticales (8C), **en ce que** l'une desdites bandes horizontales (8A) a sa couche intermédiaire (80) définissant un ou plusieurs passages restreints (9) pour le liquide de régulation de température et est configurée avec des parties affaiblies (10) capables de se rompre ou de se déformer ou de fondre à la suite d'une élévation de température locale au-dessus d'un seuil de température donné et/ou à la suite d'une élévation de pression locale au-dessus d'un seuil de pression donné, de manière à ouvrir ledit passage de communication qui crée une augmentation du débit du liquide de régulation de température, qui n'est plus restreint par lesdits passages restreints (9).

6. Module de batterie selon la revendication 5, **caractérisé en ce que** les passages restreints (9) pour le liquide de régulation de température sont définis par des fentes formées dans la couche intermédiaire (80) de ladite bande horizontale (8A).

7. Module de batterie selon la revendication 6, **caractérisé en ce que** ladite bande horizontale (8A) dans laquelle les passages restreints (9) sont formés a une ou plusieurs parties élargies (90, 81A) dans lesquelles la couche intermédiaire (80) de la bande a une fente (9) définissant le passage restreint, et des parties d'une largeur inférieure (10) définissant lesdites parties affaiblies.

8. Module de batterie selon la revendication 7, **caractérisé en ce que** ladite fente (9) est configurée pour également agir comme une invitation à une déformation ou rupture de la couche intermédiaire (80) dans laquelle elle est formée, en cas d'élévation de pression dans l'espace (7) entre les cellules au-dessus d'une valeur seuil prédéterminée.

9. Module de batterie selon la revendication 1, **caractérisé en ce que** ladite bande horizontale (8A) dont la couche intermédiaire (80) définit les passages restreints (9) est une bande inférieure du cadre d'espacement (8) adjacente à une chambre collectrice inférieure (5) ou est une bande supérieure du cadre d'espacement (8), adjacente à une chambre collectrice supérieure (6).

10. Module de batterie selon la revendication 1, **caractérisé en ce que** chaque cadre d'espacement a une structure monobloc constituée d'un seul matériau.
